# EUROPÄISCHE PATENTSCHRIFT

(11) **EP 2 945 772 B1**
(45) Veröffentlichungstag und Bekanntmachung des Hinweises auf die Patenterteilung: **14.12.2016**
(21) Anmeldenummer: 14702765.0
(22) Anmeldetag: 17.01.2014
(51) Int. Cl.: B23K 1/00, B21B 1/22, C22C 5/08, C22C 9/00, C22C 30/02, B23K 35/30

(54) **LOTLEGIERUNGEN**
SOLDER ALLOYS
ALLIAGES DE BRASAGE

(30) Priorität: 18.01.2013 EP 13151874
(43) Veröffentlichungstag der Anmeldung: 25.11.2015
(73) Patentinhaber: Umicore AG & Co. KG, 63457 Hanau-Wolfgang (DE)
(72) Erfinder: WIEHL, Gunther, 63741 Aschaffenburg (DE); SILZE, Frank, 01665 Triebischtal (DE); KEMPF, Bernd, 63839 Kleinwallstadt (DE)
(86) Internationale Anmeldenummer: PCT/EP2014/050937
(87) Internationale Veröffentlichungsnummer: WO 2014/111538

(56) Entgegenhaltungen:
- DE-A1- 19 629 375
- DE-A1- 19 629 376
- JP-A- H04 339 590
- DATABASE WPI Week 197539 7. April 1975 (1975-04-07) Thomson Scientific, London, GB; AN 1975-65066W XP002726130, -& SU 450 673 A (KOVALEVSKII P E) 7. April 1975 (1975-04-07) -& SU 450 673 A1 25. November 1974 (1974-11-25)
- DATABASE WPI Week 197937 Thomson Scientific, London, GB; AN 1979-67698B XP002726131, -& SU 637 217 A1 (ANDREEVA L I) 20. Dezember 1978 (1978-12-20) -& SU 637 217 A1 (ANDREEVA LIDIYA [SU]; MAKEDONTSEV MIKHAIL A; YUZHIN ANATOLIJ) 15. Dezember 1978 (1978-12-15)

## Beschreibung

Es ist bekannt, Metallteile, z. B. Stahlteile, Kupfer und Kupferlegierungen, Nickel und Nickellegierungen, Messinglegierungen oder metallisierte Keramiken, unter Verwendung von nichteisenhaltigem Lot zu löten. Typische Lote umfassen Silber-, Gold-, Nickel- und Kupferlote. Silberlote sind teurer und schmelzen im Allgemeinen bei niedrigeren Temperaturen als Kupferlegierungen.

Trotz verbreiteter Verwendung von Silberloten bleiben Erfordernisse für eine Legierung bestehen, wie zum Beispiel verbesserte Löteigenschaften auf Stahlsubstraten und die Reduzierung des erforderlichen Silbergehaltes. Silber-Weichlot-oder-Hartlotlegierungen mit Mangan und/oder Nickel mit Kupfergehalt sind z. B. beschrieben in JP 57-149022, JP 57-149093 oder in US-A-2 303 272.

JPH04339590 offenbart eine Lotlegierung enthaltend 15 - 90 Gew.-% Silber, 3 - 83 Gew.-% Kupfer, 2 - 10 Gew.-% Germanium und einen Rest bestehend aus zumindest einem Legierungsbestandteil ausgewählt aus der Gruppe bestehend aus ≤ 10 Gew.-% Phosphor, ≤ 8 Gew.-% Zink, ≤ 6 Gew.-% Zinn, ≤ 12 Gew.-% Gallium, ≤ 9 Gew.-% Indium, ≤ 7 Gew.-% Cadmium und ≤ 2 Gew.-% Antimon. Ferner wird Löten von Stahl oder aus freien Stahllegierungen üblicherweise mit den bekannten Lotlegierungen "Braze 580" und "Braze 655" durchgeführt, auf Basis von Silber mit Beteiligung von Cu und Mn oder ferner enthaltend Nickel (Braze 655). Dementsprechend wäre es wünschenswert, eine Silberlotlegierung mit verbesserter Benetzbarkeit zur Verfügung zur stellen.

Es bestand die Aufgabe, eine neue, im Wesentlichen zinkfreie (und damit für Vakuumanwendungen taugliche) Lotlegierung bereit zu stellen, welche eine hohe Kaltverformbarkeit, gute Benetzung von Edel- und Baustählen und einer Arbeitstemperatur von 750 °C bis 900 °C bereit zu stellen.

Die Aufgabe wird gelöst durch eine Lotlegierung gemäß Anspruch 1.

### Kurze Beschreibung der Erfindung

Die folgenden Punkte 1, 3 - 5, 8, 10 - 21, 26, 27, 29 und 33 - 35 beschreiben Ausführungsformen gemäß der Erfindung. Die Punkte 2, 6, 7, 22 - 25, 28, 30 - 32, 36 und 37 betreffen weitere Informationen.
1. Lotlegierungen bestehend aus 41 Gew.-% bis 75 Gew.-% Kupfer, 20 Gew.-% bis 44 Gew.-% Silber, 5 Gew.-% bis 15 Gew.-% Gallium und 0 bis 15 Gew.-% weiterer Legierungsbestandteile, ausgewählt aus der Gruppe bestehend aus Indium, Zinn, Germanium, Titan, Mangan, Silizium, Nickel und deren Kombinationen, wobei sich die Bestandteile zu 100 Gew.-% ergänzen und bis zu 0,15 Gew.-% tolerierte, unvermeidbare Verunreinigungen enthaltend können, ein Gehalt an Kohlenstoff nicht größer als 0,005 Gew.-% sein darf, Gehalte von Cadmium, Phosphor, Blei und Zink jeweils 0,01 Gew.-% nicht übersteigen dürfen und wobei der Germaniumgehalt weniger als 1,5 Gew.-% beträgt.
2. Lotlegierungen nach Punkt 1, enthaltend 41 Gew.-% bis 75 Gew.-% Kupfer, 20 Gew.-% bis 44 Gew.-% Silber, 5 Gew.-% bis 15 Gew.-% Gallium und 0 bis 15 Gew.-% weiterer Legierungsbestandteile, ausgewählt aus der Gruppe bestehend aus Indium, Zinn, Germanium, Titan, Mangan, Silizium, Nickel und deren Kombinationen, wobei sich die Bestandteile zu 100 Gew.-% ergänzen und unvermeidbare Verunreinigungen enthaltend können und wobei der Gehalt an Zink 0,01 Gew.-% nicht übersteigen darf.
3. Lotlegierungen nach Punkt 1 oder 2, enthaltend 25 bis 44 Gew.-% oder 30 bis 44 Gew.-Silber.
4. Lotlegierungen nach Punkt 1, 2 oder 3, enthaltend 45 bis 60 Gew.-% Kupfer.
5. Lotlegierungen nach Punkt 1, 2, 3 oder 4, enthaltend 6 Gew.-% bis 14 Gew.-% Gallium.
6. Lotlegierungen nach einem oder mehreren der vorstehenden Punkte, enthaltend 20 Gew.-% bis 44 Gew.-% Silber und 5 Gew.-% bis 15 Gew.-% Gallium, 0,1 Gew.-% bis 15 Gew.-% (oder 0,1 Gew.-% bis 10 Gew.-%) weiterer Legierungselemente, ausgewählt aus der Gruppe bestehend aus Indium, Zinn, Germanium, Titan, Mangan, Silizium, Nickel und deren Kombinationen und ad 100 Gew.-% Kupfer, wobei sich die Bestandteile zu 100 Gew.-% ergänzen und unvermeidbare Verunreinigungen enthaltend können.
7. Lotlegierungen nach Punkt 4, wobei Indium in Kombination mit Zinn, Titan oder Mangan als weiteres Element vorhanden ist.
8. Lotlegierung nach einem oder mehreren der vorstehenden Punkte, enthaltend 48 Gew.-% bis 67 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gcw.-% ist und die Mengen sich zu 100 Gew.-% ergänzen.
9. Lotlegierung nach einem oder mehreren der Punkte 1 bis 7 enthaltend 58 Gew.-% bis 65 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gew.-% ist und die Mengen sich zu 100 Gew.-% ergänzen.
10. Lotlegierung nach Punkt 8 oder 9, wobei der Gehalt an Gallium größer als 10 Gew.-% ist, wenn der Mangangehalt kleiner als 10 Gew.-% ist.
11. Lotlegierung nach einem oder mehreren der Punkte 1 bis 7 enthaltend 41 Gew.-% bis 54 Gew.-% Kupfer, 38 Gew.-% bis 42 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen.
12. Lotlegierung nach einem oder mehreren der Punkte 1 bis 7 enthaltend 41 Gew.-% bis 52 Gew.-% Kupfer, 38 Gew.-% bis 42 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.
13. Lotlegierung nach einem oder mehreren der Punkte 1 bis 7 enthaltend 50 Gew.-% bis 64 Gew.-% Kupfer, 28 Gew.-% bis 34 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen.
14. Lotlegierung nach einem oder mehreren der Punkte 1 bis 7 enthaltend 45 Gew.-% bis 62 Gew.-% Kupfer, 28 Gew.-% bis 34 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.
15. Lotlegierungen nach einem oder mehreren der vorstehenden Punkte, enthaltend 0,5 Gew.-% bis 7 Gew.-% oder 0,2 Gew.-% bis 4 Gew.-% oder 0,5 Gew.-% bis 3 Gew.-% Indium.
16. Lotlegierungen nach einem oder mehreren der vorstehenden Punkte, enthaltend 0,5 Gew.-% bis 3 Gew.-% oder oder 0,3 Gew.-% bis 1,5 Gew.-%Zinn.
17. Lotlegierungen nach einem oder mehreren der vorstehenden Punkte, enthaltend 0,3 Gew.-% bis 1,5 Gew.-% oder 0,4 Gew.-% bis 1 Gew.-% oder 0,5 Gew.-% bis 0,75 Gew.-% Germanium.
18. Lotlegierungen nach einem oder mehreren der vorstehenden Punkte, enthaltend 0,1 Gew.-% bis 4 Gew.-% oder 0,5 Gew.-% bis 2 Gew.-% Titan.
19. Lotlegierungen nach einem oder mehreren der vorstehenden Punkte, enthaltend 0,5 Gew.-% bis 15 Gew.-% oder 0,5 Gew.-% bis 10 Gew.-% Mangan.
20. Lotlegierungen nach einem oder mehreren der vorstehenden Punkte, enthaltend 0,1 Gew.-% bis 1 Gew.-% Silizium.
21. Lotlegierungen nach einem oder mehreren der vorstehenden Punkte, enthaltend 0,1 Gew.-% bis 5 Gew.-% oder 1 Gew.-% bis 4 Gew.-% oder 0,3 Gew.-% bis 2 Gew.-% Nickel.
22. Lotlegierung, insbesondere nach einem der vorstehenden Punkte, bestehend aus 5 bis 15 Gew.-% Gallium, wobei die verbleibende Zusammensetzung (ad 100 Gew.-%) Ag, Cu im Verhältnis von 25 : 61 bis 44 : 45 enthält.
23. Lotlegierungen nach einem oder mehreren der vorstehenden Punkte, wobei das Gewichtsverhältnis von Kupfer zu Silber Cu/Ag 1 bis 2,1 beträgt.
24. Lotlegierungen nach einem oder mehreren der vorstehenden Punkte, wobei das Gewichtsverhältnis von Kupfer zu Gallium Cu/Ga 4,5 bis 7,5 beträgt.
25. Verwendung der Lotlegierungen nach einem oder mehreren der vorstehenden Punkte, als Vakuumhartlot.
26. Verwendung der Lotlegierungen nach einem oder mehreren der vorstehenden Punkte als Lot in Vakuumanwendungen, Abdichtung von oder gegen Vakuum, Vakuumschaltkammern, zum Löten von Kontakten, Löten von Schaltern, in der Automobilindustrie, Löten von Werkzeugen, Löten von Hartmetallen, Lötungen im Bereich Kälte oder Klima (HVAC), Lötungen im Anlagen- und Sondermaschinenbau, Lötungen bei Haushaltsgeräten, wie beispielsweise Weiße Ware, Lötungen bei Schmuck und deren Kombinationen.
27. Ein geformter Gegenstand, enthaltend eine Lotlegierung nach einem oder mehreren der vorstehenden Punkte in Kontakt mit mindestens einem Substrat.
28. Ein geformter Gegenstand nach Punkt 27, wobei das Substrat ausgewählt ist aus der Gruppe bestehend aus Kupfer und Kupferlegierungen, Nickel und Nickellegierungen, Messinglegierungen, Baustahl- (z.B. S235), Edelstahlsorten (z.B. 1.4301 / 1.4306/1.4401 / 1.4404 / 1.4571) oder vernickelten, verkupferten, oder vergoldeten Keramiken und deren Kombinationen.
29. Verfahren zur Herstellung von geformten Gegenständen aus Lotlegierungen nach einem oder mehreren der vorstehenden Punkte, wobei die Lotlegierungen bis zu einer erzielbaren Dickenabnahme beim Kaltwalzen von größer als etwa 60%, oder größer als etwa 80% und bis zu etwa 96% oder etwa 99 % oder etwa 99,9% kalt umgeformt wird, ohne eine Wärmebehandlung durchzuführen.
30. Verfahren nach Punkt 29, wobei die Umformung durch Walzen, Schmieden, Drahtziehen oder Strangpressen erfolgt.
31. Verfahren nach Punkt 29 oder 30, wobei in einem weiteren Schritt eine Wärmebehandlung durchgeführt und anschließend ein weiteres Kaltumformen erfolgt.
32. Verfahren nach Punkt 31, wobei die Temperatur der Wärmebehandlung 400°C bis 600°C oder 400°C bis 550°C beträgt oder für eine Zeitdauer von 30 Minuten bis 300 Minuten oder von 60 Minuten bis 150 Minuten durchgeführt wird.
33. Verfahren zum Löten von Substraten, wobei eine Lotlegierung nach einem der Punkte 1 bis 24 eingesetzt wird und die Löttemperatur in einem Bereich mit einer Untergrenze von 0,3*(TL-Ts)+Ts und einer Obergrenze von TL+50 Kelvin liegt, wobei TL die Liquidustemperatur und Ts die Solidustemperatur der jeweiligen Lotlegierung ist.
34. Verfahren nach Punkt 33, wobei das Substrat ausgewählt ist aus der Gruppe bestehend aus Kupfer und Kupferlegierungen, Nickel und Nickellegierungen, Eisen oder Eisenlegierungen, Messinglegierungen, Baustahl- (z.B. S235), Edelstahlsorten (z.B. 1,4301 / 1.4306 / 1.4401 / 1.4404 /1,4571), Hartmetalle, Hartmetallverbundwerkstoffe, Kontaktwerkstoffe wie z.B. CuCr-, AgSnO2- und AgWC-Werkstoffe oder vernickelten, verkupferten, oder vergoldeten Keramiken und deren Kombinationen.
35. Geformter Gegenstand erhältlich nacht Punkt 29.
36. Verwendung nach Punkt 25 oder 26, Geformter Gegenstand nach einem der Punkte 27, 28 oder 35 sowie Verfahren nach einem der Punkte 33 bis 34, wobei sich zwischen dem Lot und mindestens einem Substrat eine Interdiffusionszone ausbildet.
37. Verwendung, Verfahren oder geformter Gegenstand nach Punkt 36, wobei das Substrat Eisen oder Eisenlegierungen oder Edelstahl wie zum Beispiel Edelstahl 1.4404, ist.

### Detaillierte Beschreibung der Erfindung

Die Lotlegierung enthält 20 Gew.-% bis 44 Gew.-% Silber, 5 Gew.-% bis 15 Gew.-% Gallium und ad 100 Gew.-% Kupfer, wobei die Bestandteile unvermeidbare Verunreinigungen enthalten können.

Die Lotlegierungen enthalten 41 Gew.-% bis 75 Gew.-% oder 45 bis 60 Gew.-% Kupfer, 20 Gew.-% bis 44 Gew.-% Silber, oder 25 bis 44 Gew.-% oder 30 bis 44 Gew.-Silber, und 5 Gew.-% bis 15 Gew.-% oder 6 Gew.-% bis 14 Gew.-% Gallium, wobei die Bestandteile sich zu 100 Gew.-% ergänzen und unvermeidbare Verunreinigungen enthaltend können.

In einer spezifischen Ausführungsform kann die Lotlegierung 20 Gew.-% bis 44 Gew.-% Silber, 5 Gew.-% bis 15 Gew.-% Gallium, 0,1 Gew.-% bis 15 Gew.-% oder 0,1 Gew.-% bis 10 Gew.-% weiterer Legierungselemente ausgewählt aus der Gruppe bestehend aus Indium, Zinn, Germanium, Titan, Mangan, Silizium, Nickel und deren Kombinationen und ad 100 Gew.-% Kupfer enthalten, wobei sich die Bestandteile zu 100 Gew.-% ergänzen und unvermeidbare Verunreinigungen enthaltend können.

Die Lotlegierungen enthalten 41 Gew.-% bis 75 Gew.-% oder 45 bis 60 Gew.-% Kupfer, 20 Gew.-% bis 44 Gew.-% Silber, oder 25 bis 44 Gew.-% oder 30 bis 44 Gew.-Silber, 5 Gew.-% bis 15 Gew.-% oder 6 Gew.-% bis 14 Gew.-% Gallium, sowie 0,1 Gew.-% bis 15 Gew.-% oder 0,1 Gew.-% bis 10 Gew.-% weiterer Legierungselemente ausgewählt aus der Gruppe bestehend aus Indium, Zinn, Germanium, Titan, Mangan, Silizium, Nickel und deren Kombinationen, wobei die Bestandteile sich zu 100 Gew.-% ergänzen und unvermeidbare Verunreinigungen enthaltend können.

In einer weiteren spezifischen Ausführungsform enthält die Lotlegierung Indium in Kombination mit Zinn, Titan, Mangan oder deren Kombinationen.

Die Lotlegierung kann weiter 0,5 Gew.-% bis 7 Gew.-% Indium, 0,3 Gew.-% bis 3 Gew.-% Zinn, 0,3 Gew.-% bis 1,5 Gew.-% Germanium, 0,1 Gew.-% bis 4 Gew.-% Titan, 0,5 Gew.-% bis 15 Gew.-% oder auch 0,5 Gew.-% bis 10 Gew.-% Mangan, 0,1 Gew.-% bis 1 Gew.-% Silizium, 0,1 Gew.-% bis 5 Gew.-% oder 1 Gew.-% bis 4 Gew.-% Nickel oder deren Kombinationen in den entsprechenden Mengen enthalten, wobei sich die Bestandteile zu 100% ergänzen und unvermeidbare Verunreinigungen enthalten können.

Die Legierungen enthalten insgesamt bis zu 0,15 Gew.-% an tolerierten, nicht vermeidbaren Verunreinigungen z.B. Lithium, Natrium, Kalium, Rubidium, Cäsium, Beryllium, Magnesium, Calcium, Strontium, Barium, Antimon, Selen, Tellur, Eisen, Zink, Silicium, Phosphor, Schwefel, Platin, Palladium, Blei, Gold, Aluminium, Zinn, Germanium, Kohlenstoff, Cadmium, Scandium, Lanthan, Cer, Praseodym, Neodym, Promethium, Samarium, Europium, Yttrium, Gadolinium, Terbium, Dysprosium, Holmium, Erbium, Thulium, Ytterbium, Lutetium und Sauerstoff. Der Gehalt von Kohlenstoff sollte nicht größer sein als 0,005 Gew.-%, die Gehalte von Cadmium, Phosphor, Blei und Zink nicht größer als jeweils 0,01 Gew.-%.
Der Gesamtgehalt der Menge an Lithium, Natrium, Kalium, Rubidium, Cäsium, Beryllium, Magnesium, Calcium, Strontium, Barium, Antimon, Selen, Tellur, Schwefel beträgt insbesondere 0,01 Gew.-% oder weniger.

In einer weiteren Ausführungsform enthält die Legierung 48 Gew.-% bis 67 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gew.-% ist und die Mengen sich zu 100 Gew.-% ergänzen. Gute Ergebnisse sind auch erreichbar, wenn der Gehalt an Gallium größer als 10 Gew.-% ist, wenn der Mangangehalt kleiner als 10 Gew.-% ist.
In einer weiteren Ausführungsform enthält die Legierung 58 Gew.-% bis 65 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gew.-% ist und die Mengen sich zu 100 Gew.-% ergänzen. Gute Ergebnisse sind auch erreichbar, wenn der Gehalt an Gallium größer als 10 Gew.-% ist, wenn der Mangangehalt kleiner als 10 Gew.-% ist.

Es wurde überraschend gefunden, daß selbst Legierungen mit niedrigen Silbergehalten von 20 Gew.-% bis 25 Gew.-% die gewünschten Eigenschaften aufweisen, sofern die Gehalte von Gallium oder Mangan oberhalb von 10 Gew.-% liegen. In diesem Fall können mit einem Indiumgehalt von 1 bis 3 Gew.-% ebenfalls gute Ergebnisse erzielt werden.

In einer weiteren Ausführungsform enthält die Legierung 41 Gew.-% bis 54 Gew.-% Kupfer, 38 Gew.-% bis 42 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen.
In einer weiteren Ausführungsform enthalt die Legierung 41 Gew.-% bis 52 Gew.-% Kupfer, 38 Gew.-% bis 42 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.

In einer weiteren Ausführungsform enthält die Legierung 50 Gew.-% bis 64 Gew.-% Kupfer, 28 Gew.-% bis 34 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen.
In einer weiteren Ausführungsform enthält die Legierung 45 Gew.-% bis 62 Gew.-% Kupfer, 28 Gew.-% bis 34 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.

Besonders brauchbare Lotlegierungen umfassen: (1) eine Lotlegierung, enthaltend 40 Gew.-% Silber, 50 Gew.-% Kupfer und 10 Gew.-% Gallium; oder (2) eine Lotlegierung, enthaltend 40 Gew.-% Silber, 46,5 Gew.-% Kupfer, 10 Gew.-% Gallium, 3 Gew.-% Indium und 0,5 Gew,-% Zinn; oder (3) eine Lotlegierung, enthaltend 5 bis 15 Gew.-% Gallium, wobei die verbleibende Zusammensetzung (ad 100 Gew.-%) Ag, Cu im proportionalen Verhältnis von 25 : 61 bis 44 : 45 ist. Das Gewichtsverhältnis von Kupfer zu Silber Cu/Ag beträgt im Allgemeinen 1 bis 2,1, das Gewichtsverhältnis von Kupfer zu Gallium Cu/Ga im Allgemeinen 4,5 bis 7,5.

Die Lotlegierung kann auf jegliche in der Technik bekannte Weise erhalten und unter Verwendung aller in der Technik bekannten Weisen in die gewünschte Form gegossen werden. Beispielsweise kann die Lotlegierung in Streifenform, Drahtform, Stangenform, Plattenform, Folienform, Rohform, Pulverform, Schrotform, Plättchenform oder Pastenform vorliegen. Die Legierung kann beispielsweise durch Kokillenguss hergestellt werden. Zur Erzeugung eines homogeneren Gefüges ist auch die Verwendung von kontinuierlichem Strangguss oder eines Legierungsgranulators oder der Legierungsverdüsung möglich. Ebenso kann eine solche Legierungspulverherstellung gefolgt werden von einer anschließenden Kompaktierung wie beispielsweise kontinuierliches Pulverstrangpressen, welches auch als unter dem Namen TEMCONEX® bekannt ist. Ebenso ist eine Weiterverarbeitung des Pulvers durch Pressen, beispielsweise kaltisostatischem Pressen (Cold Isostatic Pressing, CIP) mit anschließendem Sintern und Strangpressen möglich.

Die Lotlegierung kann bei einer Temperatur in einem Bereich von ca. 750°C bis 900°C, oder von ca. 780°C bis ca. 830°C, über eine Zeit hartgelötet werden, welche ausreichend ist, um die Lotlegierung auf ein Substrat schmelzen zu lassen, welches beispielsweise aus einem eisenhaltigen Material, z. B. Stahl oder rostfreiem Stahl, gebildet ist. Gut geeignet sind beispielsweise ebenfalls Baustahl- (z.B. S235) sowie Edelstahlsorten (z.B. 1.4301 / 1.4306 / 1.4401 / 1.4404 / 1.4571). Mit Verwendung der Legierungen der vorliegenden Erfindung kann das Löten durchgeführt werden unter Verwendung eines Ofens, lokal unter Verwendung einer Lötlampe, unter Verwendung eines Induktionserhitzers, Eintauchen in ein Lot- oder Flussmittelbad, durch Widerstandserhitzen, Lasererhitzen oder Infraroterhitzen. Abhängig von dem verwendeten Lötverfahren kann das Löten in einer Inertgasatmosphäre, z. B. Argonatmosphäre, oder einer anderen Art von Schutzatmosphäre durchgeführt werden. Die Lotlegierung der vorliegenden Erfindung schmilzt bei diesen Temperaturen und benetzt das eisenhaltige Substratmaterial ohne Schwierigkeiten, um verbunden zu werden, ohne das eisenhaltige Substratmaterial zu schmelzen. Oft bildet sich bei Verwendung der Lotlegierungen eine Interdiffusionszone aus, in welcher das Substratmaterial angelöst wird. Dies ist beispielsweise oft bei Eisenlegierungen wie Stählen in Verbindung mit den Lotlegierungen zu beobachten. Eine derartige Interdiffusionszone tritt beim Löten auf und ist als aktive Wechselwirkung zwischen Lot und Substrat vorteilhaft und erwünscht. Bei silberreichen Loten des Standes der Technik wie zum Beispiel AgCu28 oder Ag60Cu27In13 tritt eine solche Interdiffusionszone beim Löten von Edelstählen im Allgemeinen nicht auf. Die Lotlegierung der vorliegenden Erfindung kann unter Anderem verwendet werden, um Stahlflächen hartzulöten, insbesondere Flächen aus rostfreiem Stahl. Statt einem Substrat aus einer eisenhaltigen Legierung können ebenso auch Kupfer oder Kupferlegierungen, Nickel oder Nickellegierungen, Messinglegierungen, Hartmetalle, Hartmetallverbundwerkstoffe, Kontaktwerkstoffe wie z.B. CuCr-, AgSnO2- und AgWC-Werkstoffe oder vernickelten/verkupferten/vergoldeten Keramiken verwendet werden.

Die vorliegende Patentanmeldung betrifft daher auch entsprechende geformte Gegenstände.
Die Lotlegierungen sind zum Beispiel für Vakuumanwendungen geeignet, wie beispielsweise als Abdichtung von oder gegen Vakuum, in
Vakuumschaltkammern, Röntgenröhren oder im Kühlerbau, aber auch zum Löten von Kontakten, in Schaltern oder der Automobilindustrie. Auch zum Löten von Werkzeugen wie beispielsweise beim Löten von Hartmetallen oder Lötungen im Bereich Kälte oder Klima, im Anlagen- und Sondermaschinenbau sind die Lotelegierungen geeignet. Lötungen bei Haushaltsgeräten, wie beispielsweise Weiße Ware oder bei Schmuck, sind ebenfalls möglich.

Ein Vorteil der Lotlegierungen liegt in deren guter Kaltverformbarkeit trotz hoher Galliumkonzentration in der Legierung. Einerseits verbessert diese Eigenschaft die mechanische Stabilität der Lotverbindung. Andererseits kann die Lotlegierung damit leichter durch Walzen, Schmieden, Drahtziehen oder Strangpressen umgeformt werden, insbesondere beim Kaltumformen durch Walzen, Schmieden oder Drahtziehen, da bis zu einer erzielbaren Dickenabnahme beim Kaltwalzen von größer als etwa 60%, oder größer als etwa 80% und bis zu etwa 96% oder etwa 99 % oder etwa 99,9% ohne eine Wärmebehandlung wie einer Erholungs- oder Rekristallisationsglühung gearbeitet werden kann. Anschließend, also nach einer Kaltumformung von etwa 60% bis etwa 99,9%, kann eine Wärmebehandlung durchgeführt und erneut ein Kaltumformen von etwa 60% bis etwa 99,9% erfolgen. Eine derartige Wärmebehandlung kann bei Temperaturen von 400°C bis 600°C, oder von 400°C bis 550°C durchgeführt werden. Die Zeitdauer der Wärmebehandlung kann im Allgemeinen bei 30 Minuten bis 300 Minuten liegen, oder bei 60 Minuten bis 150 Minuten, oder 90 Minuten bis 140 Minuten. Die Wärmebehandlung kann in Vakuum oder einem Schutzgas wie Argon oder Stickstoff oder in reduzierender Atmosphäre wie Formiergas (z.B. N₂/H₂ 95/5, N₂/H₂ 80/20, N₂/H₂ 50/50) oder Wasserstoff, durchgeführt werden. Bei Verwendung der Lotlegierungen in einer Inertgasatmosphäre, z. B. Argonatmosphäre, muß kein Flussmittel verwendet werden.
Die beschriebenen Lotlegierungen können auch auf nicht oder nicht vollständig desoxidierten Oberflächen, also Oberflächen mit unvollständiger Oxidentfernung, verwendet werden. Die beschriebenen Lotlegierungen benetzen diese gut und lassen sich gut löten. So können beispielsweise auch chromhaltige Edelstähle gelötet werden, die eine natürliche Schicht aus Chrom (III)-oxid auf der Oberfläche aufweisen, ohne dass die Oberfläche durch Elektropolieren oder Galvanisieren mit Gold, Nickel, Kupfer oder deren Kombinationen modifiziert werden muss.
Die Lötung kann mit den Lotlegierungen gut in einem bestimmten Temperaturintervall durchgeführt werden, dessen Obergrenze durch TL+50 Kelvin und dessen Untergrenze durch 0,3*(TL-Ts)+Ts definiert wird, wobei TL die Liquidustemperatur und Ts die Solidustemperatur der jeweiligen Lotlegierung ist. Eine Ausführungsform betrifft daher auch ein Verfahren zum Löten von Substraten, vorzugsweise aus Stahl, wobei die Lotlegierung eingesetzt wird und die Löttemperatur in einem Bereich mit einer Untergrenze von 0,3*(TL-Ts)+Ts und einer Obergrenze von TL+50 Kelvin liegt, wobei TL die Liquidustemperatur und Ts die Solidustemperatur der jeweiligen Lotlegierung ist.

### Beispiele

Die aufgeführten Legierungen wurden durch Kokillenguss der entsprechenden Legierungsbestandteile erhalten. Das Schmelzen erfolgte in einem Induktionsofen. Die Größe der Ansätze betrug je 500 g der Lotlegierung. Die erhaltenen Legierungen wurden durch Walzen weiter verarbeitet und bei einer Temperatur von 830°C zum Verlöten von Edelstahl 1.4404 auf einem Substrat aus gleichem Material (Edelstahl1.4404) im Vakuum ofengelötet. Die Benetzung wurde visuell beurteilt. Die Kaltverformbarkeit wurde durch Dickenabnahme beim Walzen und die Solidus- bzw. Liquidustemperaturen durch Differenzkalorimetie (DSC) bestimmt. Für die Legierung mit der Zusammensetzung CuAg40Ga10 betrug die erzielbare Dickenabnahme beim Kaltwalzen ohne Wärmebehandlung 96%, die Solidustemperatur 724°C und die Liquidustemperatur 846°C.

| Beispiel | Cu | Ag | Ga | Mn | In | Sn | Ge | Ti | Si | Ni | Cu/Ag | Cu/Ga | Ag/Ga | B | K | L |
|---|---|---|---|---|---|---|---|---|---|---|---|---|---|---|---|---|
| 1 | 62,0 | 25 | 13 | | | | | | | | 2,5 | 4,8 | 1,92 | ++ | + | ++ |
| 2 | 60,0 | 25 | 5 | 10 | | | | | | | 2,4 | 12,0 | 5,00 | ++ | ++ | + |
| 3 | 57,0 | 25 | 5 | 13 | | | | | | | 2,3 | 11,4 | 5,00 | ++ | + | ++ |
| 4 | 55,0 | 30 | 5 | 10 | | | | | | | 1,8 | 11,0 | 6,00 | ++ | ++ | ++ |
| 5 | 60,0 | 30 | 5 | 5 | | | | | | | 2,0 | 12,0 | 6,00 | ++ | ++ | + |
| 6 | 57,0 | 30 | 5 | 5 | 3 | | | | | | 1,9 | 11,4 | 6,00 | ++ | ++ | ++ |
| 7 | 59,0 | 30 | 5 | 5 | | 1 | | | | | 2,0 | 11,8 | 6,00 | ++ | ++ | ++ |
| 8 | 59,8 | 30 | 10 | | | | | | 0,25 | | 2,0 | 6,0 | 3,00 | ++ | ++ | ++ |
| 9 | 59,5 | 30 | 10 | | | | | | 0,50 | | 2,0 | 6,0 | 3,00 | ++ | ++ | ++ |
| 10 | 55,0 | 35 | 10 | | | | | | | | 1,6 | 5,5 | 3,50 | ++ | ++ | ++ |
| 11 | 50,0 | 40 | 10 | | | | | | | | 1,3 | 5,0 | 4,00 | ++ | ++ | ++ |
| 12 | 48,0 | 42 | 10 | | | | | | | | 1,1 | 4,8 | 4,20 | ++ | ++ | ++ |
| 13 | 49,0 | 42 | 9 | | | | | | | | 1,2 | 5,4 | 4,67 | ++ | ++ | ++ |
| 14 | 51,0 | 41 | 8 | | | | | | | | 1,2 | 6,4 | 5,13 | ++ | ++ | ++ |
| 15 | 50,0 | 42 | 8 | | | | | | | | 1,2 | 6,3 | 5,25 | ++ | ++ | ++ |
| 16 | 52,0 | 38 | 10 | | | | | | | | 1,4 | 5,2 | 3,80 | ++ | ++ | ++ |
| 17 | 51,0 | 40 | 9 | | | | | | | | 1,3 | 5,7 | 4,44 | ++ | ++ | ++ |
| 18 | 51,0 | 38 | 11 | | | | | | | | 1,3 | 4,6 | 3,45 | ++ | ++ | ++ |
| 19 | 53,0 | 36 | 11 | | | | | | | | 1,5 | 4,8 | 3,27 | ++ | ++ | ++ |
| 20 | 47,0 | 40 | 10 | | 3 | | | | | | 1,2 | 4,7 | 4,00 | ++ | ++ | ++ |
| 21 | 46,5 | 40 | 10 | | 3 | 0,50 | | | | | 1,2 | 4,7 | 4,00 | ++ | ++ | ++ |
| 22 | 49,5 | 40 | 10 | | | | 0,50 | | | | 1,2 | 5,0 | 4,00 | ++ | ++ | ++ |
| 23 | 49,0 | 40 | 10 | | | 1 | | | | | 1,2 | 4,9 | 4,00 | ++ | ++ | ++ |
| 24 | 48,0 | 40 | 10 | | | | | | | 2 | 1,2 | 4,8 | 4,00 | ++ | ++ | ++ |
| 25 | 46,0 | 42 | 10 | | | | | | | 2 | 1,1 | 4,6 | 4,20 | ++ | ++ | ++ |
| 26 | 49,0 | 40 | 10 | | | | | 1 | | | 1,2 | 4,9 | 4,00 | ++ | ++ | ++ |
| 27 | 48,0 | 40 | 10 | | 1 | | | 1 | | | 1,2 | 4,8 | 4,00 | ++ | ++ | ++ |
| 28 | 45,0 | 40 | 5 | 10 | | | | | | | 1,1 | 9,0 | 8,00 | ++ | ++ | ++ |
| 29 | 50,0 | 40 | 5 | 5 | | | | | | | 1,3 | 10,0 | 8,00 | ++ | ++ | ++ |
| 30 | 47,0 | 40 | 5 | 5 | 3 | | | | | | 1,2 | 9,4 | 8,00 | ++ | ++ | ++ |
| 31 | 49,8 | 40 | 10 | | | | | | 0,25 | | 1,2 | 5,0 | 4,00 | ++ | ++ | ++ |
| 32 | 49,5 | 40 | 10 | | | | | | 0,50 | | 1,2 | 5,0 | 4,00 | ++ | ++ | ++ |
| 33 | 49,0 | 40 | 10 | | | | | 1 | | | 1,2 | 4,9 | 4,00 | ++ | ++ | ++ |
| 34 | 48,0 | 44 | 8 | | | | | | | | 1,1 | 6,0 | 5,50 | ++ | + | ++ |
| 35 | 58,0 | 20 | 5 | 15 | 2 | | | | | | 2,9 | 11,6 | 4,00 | ++ | ++ | ++ |
| 36 | 59,0 | 20 | 5 | 15 | 1 | | | | | | 3,0 | 11,8 | 4,00 | ++ | ++ | ++ |
| 37 | 62,0 | 20 | 12 | 5 | 1 | | | | | | 3,1 | 5,2 | 1,66 | ++ | ++ | + |
| 38 | 60,0 | 20 | 13 | 5 | 2 | | | | | | 3,0 | 4,6 | 1,54 | ++ | + | ++ |
| 39 | 64,0 | 20 | 13 | | 3 | | | | | | 3,2 | 4,9 | 1,53 | ++ | + | + |
| 40 | 65,0 | 20 | 15 | | | | | | | | 3,2 | 4,3 | 1,33 | ++ | + | + |
| 41 | 59,0 | 20 | 12 | 8 | 1 | | | | | | 3,0 | 4,9 | 1,67 | ++ | + | ++ |
| 42 | 58,5 | 22,5 | 5 | 13 | 1 | | | | | | 2,6 | 11,7 | 4,50 | ++ | ++ | ++ |
| 43 | 59,5 | 22,5 | 12 | 5 | 1 | | | | | | 2,6 | 45,0 | 1,88 | ++ | ++ | ++ |
| 44 | 41,0 | 43 | 5 | 10 | 1 | | | | | | 1,0 | 8,2 | 8,60 | ++ | ++ | ++ |
| 45 | 41,0 | 42 | 5 | 10 | 2 | | | | | | 1,0 | 8,2 | 8,40 | ++ | + | ++ |
| | | | | | | | | | | | | | | | | |

| Vergleichsbeispiel | Cu | Ag | Ga | Mn | In | Sn | Ge | Ti | Si | Ni | Cu/Ag | Cu/Ga | Ag/Ga | B | K | L |
|---|---|---|---|---|---|---|---|---|---|---|---|---|---|---|---|---|
| 1 | 90,0 | 0 | 10 | | | | | | | | n.d. | 9,0 | 0,00 | ++ | ++ | O |
| 2 | 82,0 | 0 | 18 | | | | | | | | n.d. | 4,6 | 0,00 | ++ | - | O |
| 3 | 80,0 | 10 | 10 | | | | | | | | 8,0 | 8,0 | 1,00 | ++ | ++ | O |
| 4 | 70,0 | 20 | 10 | | | | | | | | 3,5 | 7,0 | 2,00 | ++ | ++ | - |
| 5 | 68,0 | 30 | 2 | | | | | | | | 2,3 | 34,0 | 15,00 | - | ++ | - |
| 6 | 60,0 | 40 | | | | | | | | | 1,5 | n.d. | n.d. | O | ++ | O |
| 7 | 58,0 | 40 | 2 | | | | | | | | 1,5 | 29,0 | 20,00 | - | ++ | - |
| 8 | 45,0 | 40 | 15 | | | | | | | | 1,1 | 3,0 | 2,67 | ++ | - | ++ |
| 9 | 40,0 | 40 | 20 | | | | | | | | 1,0 | 2,0 | 2,00 | ++ | O | ++ |
| 10 | 35,0 | 40 | 25 | | | | | | | | 0,9 | 1,4 | 1,60 | ++ | O | ++ |
| 11 | 25,0 | 40 | 15 | 20 | | | | | | | 0,6 | 1,7 | 2,67 | ++ | O | ++ |
| 12 | 35,0 | 50 | 15 | | | | | | | | 0,7 | 2,3 | 3,33 | ++ | O | ++ |
| 13 | 48,0 | 50 | 2 | | | | | | | | 1,0 | 24,0 | 25,00 | - | ++ | + |
| 14 | 40,0 | 50 | 10 | | | | | | | | 0,8 | 4,0 | 5,00 | ++ | - | ++ |
| 15 | 35,0 | 55 | 10 | | | | | | | | 0,6 | 3,5 | 5,50 | ++ | - | ++ |
| 16 | 40,0 | 60 | | | | | | | | | 0,7 | n.d. | n.d. | ○ | ++ | + |
| 17 | 30,0 | 60 | | | 10 | | | | | | 0,5 | n.d. | n.d. | O | + | ++ |
| 18 | 30,0 | 60 | | | | 10 | | | | | 0,5 | n.d. | n.d. | - | + | ++ |
| 19 | 35,0 | 60 | | | | | 5 | | | | 0,6 | n.d. | n.d. | + | - | ++ |
| 20 | 15,0 | 60 | 25 | | | | | | | | 0,3 | 0,6 | 2,40 | ++ | O | ++ |
| 21 | 25,0 | 60 | 15 | | | | | | | | 0,4 | 1,7 | 4,00 | ++ | O | ++ |
| 22 | 25,0 | 65 | 10 | | | | | | | | 0,4 | 2,5 | 6,50 | ++ | O | ++ |
| 23 | 20,0 | 70 | 10 | | | | | | | | 0,3 | 2,0 | 7,00 | ++ | O | ++ |
| 24 | 28,0 | 70 | 2 | | | | | | | | 0,4 | 14,0 | 35,00 | - | ++ | ++ |
| 25 | 28,0 | 72 | | | | | | | | | 0,4 | n.d. | n.d. | O | ++ | ++ |
| 26 | 60 | 20 | 20 | | | | | | | | 3 | 3 | 1 | ++ | - | + |
| 27 | 77 | 20 | 3 | | | | | | | | 3,9 | 25,7 | 6,66 | ++ | ++ | - |
| 28 | 64,5 | 20 | 16 | | | | | | 6 | | 3,2 | 4,0 | 1,25 | ++ | - | ++ |
| 29 | 58 | 20 | 16 | | | | 6 | | | | 2,9 | 3,6 | 1,25 | ++ | - | O |
| 30 | 53 | 20 | 5 | 22 | | | | | | | 2,7 | 10,6 | 4 | + | - | ++ |
| 31 | 73 | 20 | 3 | 3 | 1 | | | | | | 3,7 | 24,3 | 6,66 | + | ++ | - |
| 32 | 60 | 20 | 10 | 10 | | 7 | | | | | 3 | 6 | 2 | ++ | - | ++ |
| 33 | 53 | 20 | 10 | 10 | 7 | | | | | | 2,7 | 5,3 | 2 | ++ | - | ++ |

Spalte B gibt das Benetzungs- und Fließverhalten auf Edelstählen an, K die Kaltverformbarkeit und L das Lötverhalten bei 830°C.Die Mengen der Legierungsbestandteile sind in Gewichtsprozent angegeben. Die Beurteilung von Benetzung- und Fließverhalten, des Lötverhaltens bei 830°C und der Kaltverformbarkeit sind mit ++ - sehr gut, + gut, o nicht gut - inakzeptabel bewertet. Das Kürzel "n.d." steht für Werte, die nicht bestimmbar sind.

## Patentansprüche

1. Lotlegierungen bestehend aus 41 Gew.-% bis 75 Gew.-% Kupfer, 20 Gew.-% bis 44 Gew.-% Silber, 5 Gew.-% bis 15 Gew.-% Gallium und 0 bis 15 Gew.-% weiterer Legierungsbestandteile, ausgewählt aus der Gruppe bestehend aus Indium, Zinn, Germanium, Titan, Mangan, Silizium, Nickel und deren Kombinationen, wobei sich die Bestandteile zu 100 Gew.-% ergänzen und bis zu 0,15 Gew.-% tolerierte, unvermeidbare Verunreinigungen enthaltend können, ein Gehalt an Kohlenstoff nicht größer als 0,005 Gew.-% sein darf, Gehalte von Cadmium, Phosphor, Blei und Zink jeweils 0,01 Gew.-% nicht übersteigen dürfen und wobei der Germaniumgehalt weniger als 1,5 Gew.-% beträgt.

2. Lotlegierungen nach Anspruch 1, enthaltend 25 bis 44 Gew.-% Silber.

3. Lotlegierungen nach Anspruch 1 oder 2, enthaltend 45 bis 60 Gew.-% Kupfer.

4. Lotlegierungen nach Anspruch 1, 2 oder 3, enthaltend 6 Gew.-% bis 14 Gew.-% Gallium.

5. Lotlegierungen nach Anspruch 1, 2, 3 oder 4, enthaltend 48 Gew.-% bis 67 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gew.-% ist und die Mengen sich zu 100 Gew.-% ergänzen.

6. Lotlegierung nach Anspruch 5, wobei der Gehalt an Gallium größer als 10 Gew.-% ist, wenn der Mangangehalt kleiner als 10 Gew.-% ist.

7. Lotlegierungen nach Anspruch 1, 2, 3 oder 4, enthaltend 41 Gew.-% bis 54 Gew.-% Kupfer, 38 Gew.-% bis 42 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen.

8. Lotlegierungen nach Anspruch 1, 2, 3 oder 4, enthaltend 41 Gew.-% bis 52 Gew.-% Kupfer, 38 Gew.-% bis 42 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.

9. Lotlegierungen nach Anspruch 1, 2, 3 oder 4, enthaltend 50 Gew.-% bis 64 Gew.-% Kupfer, 28 Gew.-% bis 34 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen.

10. Lotlegierungen nach Anspruch 1, 2, 3 oder 4, enthaltend 45 Gew.-% bis 62 Gew.-% Kupfer, 28 Gew.-% bis 34 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.

11. Lotlegierungen nach einem oder mehreren der vorstehenden Ansprüche, enthaltend weitere Legierungsbestandteile ausgewählt aus der Gruppe bestehend aus 0,5 Gew.-% bis 15 Gew.-% Mangan, 0,1 Gew.-% bis 5 Gew.-% Nickel, 0,5 Gew.-% bis 7 Gew.-% Indium, 0,3 Gew.-% bis 3 Gew.-% Zinn, 0,3 Gew.-% bis 1,5 Gew.-% Germanium, 0,1 Gew.-% bis 4 Gew.-% Titan, 0,1 Gew.-% bis 1 Gew.-% Silizium und deren Kombinationen.

12. Verwendung der Lotlegierungen nach einem oder mehreren der vorstehenden Ansprüche 1 bis 11 als Lot in Vakuumanwendungen, Abdichtung von oder gegen Vakuum, Vakuumschaltkammern, zum Löten von Kontakten, Löten von Schaltern, in der Automobilindustrie, Löten von Werkzeugen, Löten von Hartmetallen, Lötungen im Bereich Kälte oder Klima (HVAC), Lötungen im Anlagen- und Sondermaschinenbau, als Vakuumhartlot, Lötungen bei Haushaltsgeräten, wie beispielsweise Weiße Ware, Lötungen bei Schmuck und deren Kombinationen.

13. Ein geformter Gegenstand, enthaltend eine Lotlegierung nach einem oder mehreren der Ansprüche 1 bis 11 in Kontakt mit mindestens einem Substrat.

14. Verfahren zur Herstellung von geformten Gegenständen aus Lotlegierungen nach einem oder mehreren der Ansprüche 1 bis 11, wobei die Lotlegierungen bis zu einer erzielbaren Dickenabnahme beim Kaltwalzen von größer als 60% kalt umgeformt werden, ohne eine Wärmebehandlung durchzuführen.

15. Verfahren zum Löten von Substraten, wobei eine Lotlegierung nach einem der Ansprüche 1 bis 11 eingesetzt wird und die Löttemperatur in einem Bereich mit einer Untergrenze von 0,3*(TL-Ts)+Ts und einer Obergrenze von TL+50 Kelvin liegt, wobei TL die Liquidustemperatur und Ts die Solidustemperatur der jeweiligen Lotlegierung ist.

16. Verfahren nach Anspruch 15, wobei das Substrat ausgewählt ist aus der Gruppe bestehend aus Kupfer und Kupferlegierungen, Nickel und Nickellegierungen, Messinglegierungen, Baustahl- (z.B. S235), Edelstahlsorten (z.B. 1.4301 / 1.4306 / 1.4401 / 1.4404 / 1.4571), Hartmetalle, Hartmetallverbundwerkstoffe, Kontaktwerkstoffe oder vernickelten, verkupferten, oder vergoldeten Keramiken und deren Kombinationen.

17. Geformter Gegenstand erhältlich nach Anspruch 14.

18. Geformter Gegenstand nach Anspruch 13, wobei sich zwischen dem Lot und mindestens einem Substrat eine Interdiffusionszone ausbildet.

19. Gelötetes Substrat, erhältlich nach einem Verfahren der Ansprüche 15 oder 16.

## Claims

1. Brazing alloys consisting of 41 wt% to 75 wt% copper, 20 wt% to 44 wt% silver, 5 wt% to 15 wt% gallium, and 0 to 15 wt% additional alloy constituents, selected from the group consisting of indium, tin, germanium, titanium, manganese, silicon, nickel, and combinations thereof, wherein the constituents add up to 100 wt% and may contain up to 0.15 wt% tolerated, unavoidable impurities, a carbon content that may not exceed 0.005 wt%, cadmium, phosphorus, lead, and zinc content of no more than 0.01 wt% each, and wherein the germanium content is less than 1.5 wt%.

2. Brazing alloys according to claim 1, containing 25 to 44 wt% silver.

3. Brazing alloys according to claim 1 or 2, containing 45 to 60 wt% copper.

4. Brazing alloys according to claim 1, 2, or 3, containing 6 wt% to 14 wt% gallium.

5. Brazing alloys according to claim 1, 2, 3, or 4, containing 48 wt% to 67 wt% copper, 20 wt% to 25 wt% silver, 5 to 15 wt% gallium, 0 wt% to 15 wt% manganese, 0 wt% to 3 wt% indium, wherein the manganese content is greater than 10 wt%, if the gallium content is less than 10 wt%, and the quantities add up to 100 wt%.

6. Brazing alloy according to claim 5, wherein the gallium content is greater than 10 wt%, if the manganese content is less than 10 wt%.

7. Brazing alloys according to claim 1, 2, 3, or 4, containing 41 wt% to 54 wt% copper, 38 wt% to 42 wt% silver, 8 to 12 wt% gallium, 0 wt% to 5 wt% manganese, 0 wt% to 4 wt% indium, wherein the quantities add up to 100 wt%.

8. Brazing alloys according to claim 1, 2, 3, or 4, containing 41 wt% to 52 wt% copper, 38 wt% to 42 wt% silver, 5 to 9 wt% gallium, 7 wt% to 12 wt% manganese, 0 wt% to 4 wt% indium, wherein the quantities add up to 100 wt%.

9. Brazing alloys according to claim 1, 2, 3, or 4, containing 50 wt% to 64 wt% copper, 28 wt% to 34 wt% silver, 8 to 12 wt% gallium, 0 wt% to 5 wt% manganese, 0 wt% to 4 wt% indium, wherein the quantities add up to 100 wt%.

10. Brazing alloys according to claim 1, 2, 3, or 4, containing 45 wt% to 62 wt% copper, 28 wt% to 34 wt% silver, 5 to 9 wt% gallium, 7 wt% to 12 wt% manganese, 0 wt% to 4 wt% indium, wherein the quantities add up to 100 wt%.

11. Brazing alloys according to one or more of the preceding claims, containing additional alloy constituents selected from the group consisting of 0.5 wt% to 15 wt% manganese, 0.1 wt% to 5 wt% nickel, 0.5 wt% to 7 wt% indium, 0.3 wt% to 3 wt% tin, 0.3 wt% to 1.5 wt% germanium, 0.1 wt% to 4 wt% titanium, 0.1 wt% to 1 wt% silicon, and combinations thereof.

12. Use of the brazing alloys according to one or more of the preceding claims 1 through 11 as solder in vacuum applications, sealing of or against a vacuum, vacuum switching chambers, for brazing of contacts, brazing of switches, in the automotive industry, brazing of tools, brazing of hard metals, brazing in the refrigeration or climate control (HVAC) fields, brazing in plant and special machine construction, as vacuum hard solder, brazing of household devices such as white goods, brazing of jewelry, and combinations thereof.

13. A shaped article containing a brazing alloy according to one or more of claims 1 through 11 in contact with at least one substrate.

14. Method for producing molded articles from brazing alloys according to one or more of claims 1 through 11, wherein the brazing alloys are cold-formed to an achievable thickness reduction of more than 60% during cold rolling, without performing a heat treatment.

15. Method for brazing of substrates, wherein a brazing alloy according to one of claims 1 through 11 is used, and the brazing temperature is in a range with a lower limit of 0.3*(TL-Ts)+Ts and an upper limit of TL+50 Kelvin, wherein TL is the liquidus temperature and Ts is the solidus temperature of the respective brazing alloy.

16. Method according to claim 15, wherein the substrate is selected from the group consisting of copper and copper alloys, nickel and nickel alloys, brass alloys, structural steel types (e.g., S235), stainless steel types (e.g., 1.4301 /1.4306 / 1.4401 /1.4404 / 1.4571), hard metals, hard metal composite materials, contact materials, or nickel-plated, copper-plated, or gold-plated ceramics, and combinations thereof.

17. Molded article obtainable according to claim 14.

18. Shaped article according to claim 13, wherein an interdiffusion zone forms between the solder and at least one substrate.

19. Brazed substrate, obtainable according to a method of claims 15 or 16.

## Revendications

1. Alliages de brasage constitués de 41 % en poids à 75 % en poids de cuivre, 20 % en poids à 44 % en poids d'argent, 5 % en poids à 15 % en poids de gallium et 0 à 15 % en poids d'autres composants d'alliage, sélectionnés dans le groupe constitué d'indium, d'étain, de germanium, de titane, de manganèse, de silicium, de nickel et de leurs combinaisons, les composants se complétant à 100 % en poids et pouvant contenir des impuretés inévitables tolérées jusqu'à 0,15 % en poids, une teneur en carbone ne devant pas dépasser 0,005 % en poids, les teneurs en cadmium, phosphore, plomb et zinc ne devant pas dépasser respectivement 0,01 % en poids et la teneur en germanium étant inférieure à 1,5 % en poids.

2. Alliages de brasage selon la revendication 1 contenant de 25 à 44 % en poids d'argent.

3. Alliages de brasage selon la revendication 1 ou 2 contenant de 45 à 60 % en poids de cuivre.

4. Alliages de brasage selon la revendication 1, 2 ou 3 contenant de 6 % en poids à 14 % en poids de gallium.

5. Alliages de brasage selon la revendication 1, 2, 3 ou 4, contenant 48 % en poids à 67 % en poids de cuivre, 20 % en poids à 25 % en poids d'argent, 5 % à 15 % en poids de gallium, 0 % en poids à 15 % de manganèse, 0 % en poids à 3 % en poids d'indium, la teneur en manganèse étant supérieure à 10 % en poids si la teneur en gallium est inférieure à 10 % en poids, les quantités se complétant à 100 % en poids.

6. Alliages de brasage selon la revendication 5 dans lesquels la teneur en gallium est supérieure à 10 % en poids si la teneur en manganèse est inférieure à 10 % en poids.

7. Alliages de brasage selon la revendication 1, 2, 3 ou 4 contenant 41 % en poids à 54 % de cuivre, 38 % en poids à 42 % en poids d'argent, 8 à 12 % en poids de gallium, 0 % en poids à 5 % de manganèse et 0 % en poids à 4 % en poids d'indium, les quantités se complétant à 100 % en poids.

8. Alliages de brasage selon la revendication 1, 2, 3 ou 4 contenant 41 % en poids à 52 % de cuivre, 38 % en poids à 42 % en poids d'argent, 5 % à 9 % en poids de gallium, 7 % en poids à 12 % en poids de manganèse et 0 % en poids à 4 % en poids d'indium, les quantités se complétant à 100 % en poids.

9. Alliages de brasage selon la revendication 1, 2, 3 ou 4 contenant 50 % en poids à 64 % de cuivre, 28 % en poids à 34 % en poids d'argent, 8 à 12 % en poids de gallium, 0 % en poids à 5 % de manganèse et 0 % en poids à 4 % en poids d'indium, les quantités se complétant à 100 % en poids.

10. Alliages de brasage selon la revendication 1, 2, 3 ou 4 contenant 45 % en poids à 62 % de cuivre, 28 % en poids à 34 % en poids d'argent, 5 à 9 % en poids de gallium, 7 % en poids à 12 % de manganèse et 0 % en poids à 4 % en poids d'indium, les quantités se complétant à 100 % en poids.

11. Alliages de brasage selon une ou plusieurs des revendications précédentes contenant d'autres composants d'alliage sélectionnés dans le groupe constitué de 0,5 % en poids à 15 % en poids de manganèse, 0,1 % en poids à 5 % en poids de nickel, 0,5 % en poids à 7 % en poids d'indium, 0,3 % en poids à 3 % en poids d'étain, 0,3 % à 1,5 % en poids de germanium, 0,1 % en poids à 4 % en poids de titane et 0,1 % en poids à 1 % en poids de silicium et leurs combinaisons.

12. Utilisation des alliages de brasage selon une ou plusieurs des revendications précédentes 1 à 11 en tant que brasage dans des applications sous vide, étanchéité contre le vide ou au vide, chambres de commutation sous vide, pour le brasage de contacts, le brasage d'interrupteurs, dans l'industrie automobile, le brasage d'outils, le brasage de métaux durs, des brasages dans le domaine du froid ou de la climatisation (HVAC), brasages dans la fabrication de machines spéciales et d'installations, en tant que brasage fort sous vide, brasages pour appareils ménagers, par exemple l'électroménager, des brasages pour les bijoux et leurs combinaisons.

13. Objet façonné contenant un alliage de brasage selon une ou plusieurs des revendications 1 à 11, en contact avec au moins un substrat.

14. Procédé de fabrication d'objets moulés en alliages de brasage, selon une ou plusieurs des revendications 1 à 11, dans lequel les alliages de brasage sont déformés à froid jusqu'à une perte d'épaisseur de plus de 60 % pouvant être obtenue lors du laminage à froid sans appliquer de traitement thermique.

15. Procédé de brasage de substrat dans lequel un alliage de brasage selon une des revendications 1 à 11 est utilisé et la température de brasage se situe dans une plage ayant pour limite inférieure 0,3* (TL-Ts)+Ts et limite supérieure TL+50 kelvin, TL étant la température de liquidus et Ts étant la température de solidus de l'alliage de brasage concerné.

16. Procédé selon la revendication 15 dans lequel le substrat est sélectionné dans le groupe constitué du cuivre et des alliages de cuivre, du nickel et des alliages de nickel, des alliages de laiton, des types d'acier de construction (par ex. S235) et inoxydables (par ex. 1.4301/1.4306/1.4401/1.4404/1.4571), des métaux durs, des matériaux composites de métaux durs, des matériaux de contact ou des céramiques nickelées, cuivrées ou dorées et de leurs combinaisons.

17. Objet moulé pouvant être obtenu selon la revendication 14.

18. Objet façonné selon la revendication 13 dans lequel une inter diffusion se forme entre le brasage et au moins un substrat.

19. Substrat brasé pouvant être obtenu selon un procédé selon les revendications 15 ou 16.
